# EUROPEAN PATENT APPLICATION

(11) **EP 4 836 355 A1**
(43) Date of publication of application: **04.11.2026**
(21) Application number: 24913713.4
(22) Date of filing: 27.12.2024
(51) Int. Cl.: H04L 9/40

(54) **ATTACK SURFACE INFORMATION-BASED DECEPTION INFORMATION GENERATION SYSTEM AND METHOD**

(30) Priority: 29.12.2023 KR 20230195903
(71) Applicant: Hanwha Ocean Co., Ltd., Geoje-si, Gyeongsangnam-do 53302 (KR); Cytur Inc., Seoul 08511 (KR)
(72) Inventor: PARK, Dong Hoon, Sejong 30098 (KR); JO, Yong Hyun, Seoul 08511 (KR)
(74) Representative: Zacco Sweden AB
(86) International application number: PCT/KR2024/021344
(87) International publication number: WO 2025/143909

(57) **Abstract**

The present invention relates to a system and method for generation of deception information based on attack surface information, particularly a system and method for generation of deception information based on attack surface information for protecting a ship by deceiving a cyber attacker attacking the ship, posing as an actual internal system of the ship, and identifying a sign of attack in an early stage to respond promptly to the sign of attack.

## Description

### [Technical Field]

The present invention relates to a system and method for generating deception information based on attack surface information, and provides a technology for protecting a ship by deceiving cyber attackers attacking the ship, posing as an actual internal system of the ship, and identifying a sign of attack in an early stage to respond promptly to the sign of attack.

### [Background Art]

Conventionally, to address cyber threats, deception-based technology is used to deceive and lure cyberattackers together with a dedicated monitoring framework and module configured to block the spread of damage at an early stage by detecting anomalies at an attack preparation stage. In addition, the resulting detection logs are linked with other security equipment to improve the overall detection rate.

Furthermore, although cyber threats to ships are increasing due to a rapid increase in construction of ICT-based autonomous ships, smart ships, and unmanned ships as well as the growing connectivity between land and sea ships, there have been limitations in establishing and operating diverse security systems comparable to those on land. Moreover, transmission of all security logs from the interior of a ship to land results in excessive satellite communication costs.

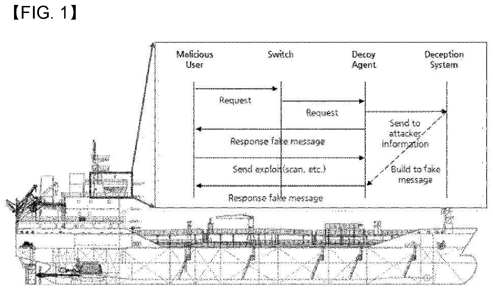

Referring to FIG. 1, the deception-based technology involves placing a decoy system, disguised as a monitoring device or a legitimate device, at the network perimeter, whereby packets received by the decoy system using registered IP addresses are classified as legitimate, whereas those using unregistered IP addresses are forwarded to a decoy agent. Here, since the communication paths within the ship are limited to an IEEE 6112-450/460 environment and are used to analyze attackers lured by operating a large number of vulnerable systems based on virtualization, conventional deception-based technologies require excessive resources (systems, VMs, IPs, and the like) to be installed on the ship, leading to difficulties within the constrained environment of ship systems, networks, and human resources.

The related art is disclosed in Korean Patent Laid-open Publication 10-2020-0055403 (published on May 21, 2020).

### [Disclosure]

### [Technical Problem]

It is one aspect of the present invention to provide a system and method for generating deception information based on attack surface information, which ensures detection and defense against cyber threats in new environments to address increase in construction of ICT-based ships, such as smart ships, autonomous ships, and the like.

It is another aspect of the present invention to provide a system and method for generating deception information based on attack surface information, which deceives cyberattackers by posing as an actual internal ship system, thereby enabling early detection of attack indicators and preventing system damage.

### [Technical Solution]

In accordance with one aspect of the present invention, a system for generating deception information based on attack surface information includes: a deception terminal configured to deceive cyber attackers attacking a ship, and a luring terminal configured to pose as an actual internal system of the ship to lure cyberattacks and analyze information of the cyber attackers, wherein the deception terminal includes a luring information generation unit generating luring information, a luring information determination unit determining whether a user, system, or device approaching the deception terminal is a legitimate user or a malicious user, and a luring information action unit transmitting a blocking or alarm event if the lured user, system, or device is determined to be a malicious user; the luring terminal includes a lured subject information collection unit collecting packets initially transmitted to the luring terminal, a lured subject information analysis unit analyzing the packets input to the luring terminal, and a luring unit allowing a luring agent to operate, the luring agent being generated based on the luring information generated by the luring information generation unit of the deception terminal, and the system determines a risk level of a lured subject, based on received data including packet data input to the deception terminal and input data from the lured subject, and identifies the lured subject as an attacker to allow appropriate measures to be taken via notification if the risk level is calculated to be equal to or greater than a preset value.

The luring information generation unit of the luring terminal may generate web pages, configuration files, dynamic navigation information, and system hardware information (MAC addresses) for a maritime satellite communication system of the ship.

The luring information determination unit of the luring terminal may determine whether the lured subject is an attacker, based on a risk score calculated based on the received data including the input packets and the input data from the lured subject.

If the risk level is calculated to be equal to or greater than a certain threshold, the luring information action unit of the luring terminal may identify the lured subject as an attacker and a deception system may alert a user via an emergency bell or message, a ship terminal alarm, or an HMI message on an alarm monitoring system of the ship.

The lured subject information analysis unit of the luring terminal may classify signals of the packets input to the luring terminal, define and extract message values from the classified signals, and extract lured subject information from the extracted message values.

The luring unit of the luring terminal may allow a luring agent to operate, the luring agent being generated by the luring information generation unit of the deception terminal based on programs, operating systems, and system information having characteristics of onboard equipment systems of the ship.

In accordance with another aspect of the present invention, a method for generating deception information based on attack surface information in a system for generating deception information based on attack surface information, the system including a deception terminal configured to deceive cyber attackers attacking a ship, and a luring terminal configured to pose as an actual internal system of the ship to lure cyberattacks and analyze information of the cyber attackers, the method comprising: a deception information generation step in which a luring information generation unit of the deception terminal generates luring information; a lured subject information collection step in which the luring information generated in the luring information generation step is received and packets initially transmitted to the luring terminal are collected by a luring information collection unit; a lured subject information analysis step in which lured subject information (the luring information?) and the packets collected in the lured subject information collection step are analyzed; a luring step in which a luring agent is operated by a luring unit, the luring agent being generated based on the luring information generated by the luring information generation unit of the deception terminal; a luring information determination step in which it is determined whether a user, system, or device approaching the luring terminal in the luring step is a legitimate user or a malicious user; and an action step in which, upon determining that the user, system, or device lured through the luring information determination step is a malicious user, a blocking or alarm event is transmitted from a luring information action unit.

The luring information generation step may include generating web pages, configuration files, dynamic navigation information, and system hardware information (MAC addresses) for a maritime satellite communication system of the ship.

The luring information determination step may include determining whether a lured subject is an attacker, based on a risk score calculated based on received data including the input packets and input data from the lured subject.

In the action step, if the risk level is calculated to be equal to or greater than a certain threshold, the target is identified as an attacker and a deception system may alert a user via an emergency bell or message, a ship terminal alarm, or an HMI message on an alarm monitoring system of the ship.

The lured subject information analysis step may include classifying signals of the packets input to the luring terminal, defining and extracting message values from the classified signals, and extracting lured subject information from the extracted message values.

The luring step may include allowing a luring agent to operate, the luring agent being generated by the luring information generation unit of the deception terminal based on programs, operating systems, and system information having characteristics of onboard equipment systems of the ship.

### [Advantageous Effects]

Embodiments of the present invention provide a system and method for generating deception information based on attack surface information, which ensures detection and defense against cyber threats in new environments to address increase in construction of ICT-based ships, such as smart ships, autonomous ships, and the like.

In addition, embodiments of the present invention provide a system and method for generating deception information based on attack surface information, which deceives cyberattackers by posing as an actual internal ship system, thereby enabling early detection of attack indicators and preventing system damage.

### [Description of Drawings]

FIG. 1 is a diagram illustrating conventional deception technology against cyber threats.
FIG. 2 is a diagram illustrating the configuration of a system for generating deception information based on attack surface information according to the present invention.
FIG. 3 is a diagram illustrating a process performed by a lured subject information analysis unit in the system for generating deception information based on attack surface information according to the present invention.
FIG. 4 is a diagram illustrating detailed data of the lured subject information analysis unit in the system for generating deception information based on attack surface information according to the present invention.
FIG. 5 is a diagram illustrating a process performed by the lured subject information determination unit in the system for generating deception information based on attack surface information according to the present invention.
FIG. 6 is a diagram illustrating an example of alarm display performed by a luring information action unit in the system for generating deception information based on attack surface information according to the present invention.

### [Best Mode]

The above and other aspects, features, and advantages of the present invention will become apparent from the detailed description of the following embodiments in conjunction with the accompanying drawings.

The terminology used herein is for the purpose of describing particular embodiments and is not intended to be limiting. As used herein, the terms "comprises," "comprising," "includes," and/or "including," when used in this specification, specify the presence of stated features, integers, steps, operations, elements, components, and/or groups thereof, but do not preclude the presence or addition of one or more other features, integers, steps, operations, elements, components, and/or groups thereof. Further, as used herein, the singular forms "a", "an" and "the" are intended to include the plural forms as well, unless the context clearly indicates otherwise.

Hereinafter, exemplary embodiments of the present invention will be described in detail with reference to the accompanying drawings. It should be understood that the embodiments are provided for complete disclosure and thorough understanding of the present invention by those skilled in the art and that the present invention is not limited to the following embodiments and may be embodied in different ways by those skilled in the art.

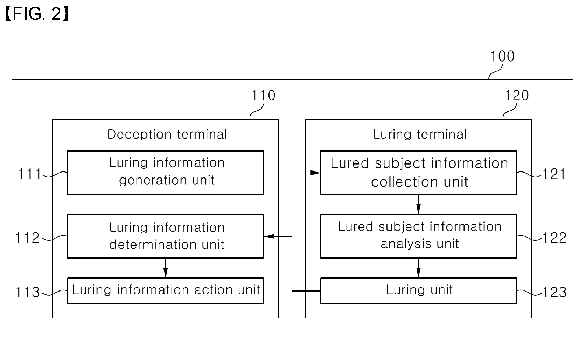

Referring to FIG. 2 to FIG. 6, an attack surface information-based deception information generation system 100 according to the present invention includes: a deception terminal 110 including a luring information generation unit 111 that generates luring information, a luring information determination unit 112 that determines whether a user, system, or device approaching the deception terminal is a legitimate user or a malicious user, and a luring information action unit 113 that transmits a blocking or alarm event if the lured user, system, or device is identifie as a malicious user; a lured subject information collection unit 121 that collects packets initially transmitted to the luring terminal 120, a lured subject information analysis unit 122 that analyzes the packets input to the luring terminal, and a luring unit 123 that allows a luring agent, generated through information generated by the luring information generation unit of the deception terminal, to operate.

Here, the attack surface information-based deception information generation system 100 incorporates isolation measures, which take into account an 802.1x environment of a ship, and adopt the 802.1x protocol as a mandatory requirement for the cybersecurity technology implemented in a newly built ship.

Alternatively, the attack surface information-based deception information generation system 100 may adopt protocols or device authentication methods used in wireless environments, and may block abnormal access by deauthenticating or disassociating the abnormal access through mutual authentication with the system.

In the attack surface information-based deception information generation system 100 according to the present invention, the luring information generation unit 111 of the luring terminal 110 generates major system information regarding major onboard systems to mislead cyber attackers into believing they are approaching the internal systems of the ship.

In addition, the major system information may be configured to have characteristics of operating systems, programs, and networks of navigation, communication, control, propulsion, and power systems of the ship.

Furthermore, the major system information may include navigation information (such as heading, speed, GPS, throttle, temperature, and pressure) as well as manufacturer, product name, and hardware information (MAC addresses) of each system.

Furthermore, the information generated by the luring information generation unit 111 may be input to the luring terminal.

That is, the luring information collection unit 121 of the luring terminal 120 may collect packets initially transmitted to the luring terminal 120, and an interface thereof may be configured with industry standards, such as RS-232, RS-422, and Modbus TCP Master/Slave.

Furthermore, the lured subject information analysis unit 122 analyzes the packets input to the luring terminal 120. Specifically, the lured subject information analysis unit 122 classifies TPC packets according to commonly known protocols, such as HTTP, FTP, and SSH, as well as MODBUS, NMEA, PLC, and CAN.

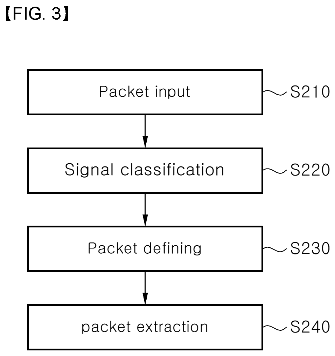

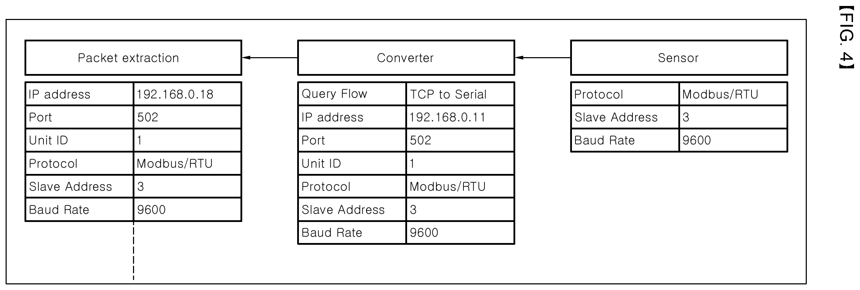

Referring to FIG. 3 and FIG. 4, a lured subject information analysis process performed by the lured subject information analysis unit 122 includes a signal classification step S220 in which a signal is classified from a packet input in a packet input step S210, a packet definition step S230 in which a message value is extracted from the signal classified in the signal classification step S220, and a packet extraction step S240 in which packet data is extracted based on the message value extracted in the packet definition step S230 to verify lured subject information .

More specifically, the lured subject information analysis unit 122 classifies a signal (S220) from the packet input to the luring terminal 120 (S210).

Here, the signal classification step S220 includes classifying the input packet as a normal TCP packet or a TCP packet transmitted from a control terminal device.

Next, the packet definition step S230 includes extracting the message value from the classified signal.

For example, when the classified signal is MODBUS-TCP, the message value is defined from RS-485/Modbus-RTU, an industrial standard.

In the packet extraction step S240, the IP address, Port, Unit ID, Protocol, Slave Address, Baud rate, and the like are verified.

In the luring unit 123 of the luring terminal 120, a luring agent operates. The luring agent is generated based on programs, operating system, and system information having characteristics of onboard equipment systems of the ship by the luring information generation unit 111 of the deception terminal 110.

The luring agent supports protocols, such as HTTP, FTP, SSH, SFTP, TELNET, MODBUS, PLC, CAN, NMEA, and possesses respective port and MAC information to operate like actual equipment.

For example, when the luring information generation unit 111 generates luring information for a maritime satellite communication system of the ship, the luring information includes web pages, configuration files, dynamic navigation information, and system hardware information (MAC addresses) for the maritime satellite communication system.

The dynamic navigation information may include detailed information, such as the ship's current position (GPS position), heading, and knots.

Furthermore, when the luring information is generated by the luring information generation unit 111 and transmitted to an alarm monitoring system (AMS) of the ship, the luring information may include hardware information (MAC addresses), information on open ports, and information on active services.

The luring Information determination unit 112 determines whether the lured subject is an attacker, based on a risk score, using received data including the input packets and input data from the lured subject.

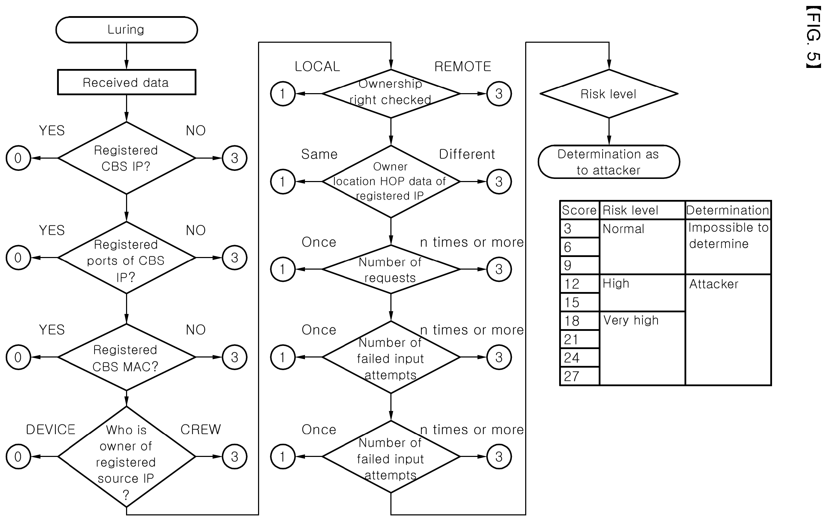

That is, as shown in FIG. 5, based on the received data, it is checked whether the IP address of the lured subject is a registered CBS IP (Computer-Based System Internet Protocol). If registered, a risk score of 0 is assigned, and if not registered, a risk score of 3 is assigned.

Next, it is checked whether the port of the lured subject is a port of a registered CBS IP. If registered, a risk score of 0 is assigned; if not registered, a risk score of 3 is assigned.

Next, it is checked whether the hardware information of the lured subject corresponds to a registered CBS MAC address. If registered, a risk score of 0 is assigned, and if not registered, a risk score of 3 is assigned.

In other words, if registered, the risk score does not increase; if not registered, the risk score may be accumulated and increase.

Next, it is checked who owns the registered source IP. If the owner is a device, a risk score of 0 is assigned; if the owner is a crew member, a risk score of 3 is assigned.

Next, a user ownership right is checked. A risk score of 1 is assigned if LOCAL and a risk score of 3 is assigned if REMOTE.

Next, location hop information of the registered IP owner is checked. If the location hop information matches the user information, a risk score of 1 is assigned, and if it does not match the user information, a risk score of 3 is assigned.

Next, the number of requests made by the lured subject is checked. If the number of requires is 1, a risk score of 1 is assigned, and if the number of requires is n or more, a risk score of 3 is assigned.

Next, the number of failed input attempts by the lured subject is checked. If there is one attempt, a risk score of 1 is assigned, and if there are n or more attempts, a risk score of 3 is assigned.

Next, the risk level is determined based on the total score of the lured subject, and if the total score is calculated to be equal to or greater than a preset threshold, the lured subject may be identified as an attacker.

If the risk level is calculated to be equal to or greater than a certain threshold, the luring information action unit 113 identifies the lured subject as an attacker and a deception system may alert a user (crew member or shore-based staff) via an emergency bell or message, a ship terminal alarm, or an HMI message on an alarm monitoring system (AMS) of the ship.

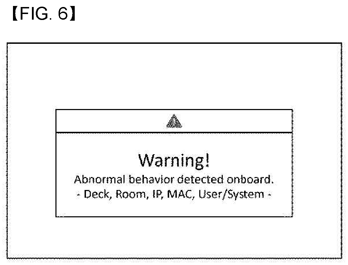

As shown in FIG. 6, by comparing the detected Source IP with the registered CBS Inventory information, the displayed message provides specific details of the IP, including the corresponding Deck, Room, IP, MAC, and User/System information. As a result, it is possible for a shore or onboard personnel to take remote or on-site action.

Accordingly, the system and method according to the present invention ensures detection and defense against cyber threats in new environments to address increase in construction of ICT-based ships, such as smart ships, autonomous ships, and the like.

Furthermore, the system and method according to the present invention deceives cyberattackers by posing as an actual internal ship system, thereby enabling early detection of attack indicators and preventing system damage.

The embodiments of the present invention described above may be implemented in the form of program instructions executable by various computer components and recorded on a computer-readable recording medium. The computer-readable recording medium may include program instructions, a data file, a data structure, and the like, solely or in combination. The program instructions recorded on the computer-readable recording medium may be specially designed and constructed for the present invention or may be those known and available to those skilled in the art of computer software. Examples of the computer-readable medium include a hardware device specifically configured to store and execute the program instructions, including: magnetic media, such as hard disks, floppy disks, and magnetic tape; optical recording media, such as CD-ROMs and DVDs; magneto-optical media, such as floptical disks; ROM; RAM; and flash memory. Examples of the program commands include not only machine language code generated by a compiler, but also high-level language code executable on a computer using an interpreter or the like. The hardware device may be configured to operate as one or more software modules to perform the operations according to the present invention, or vice versa.

Although some embodiments have been described herein, it should be understood that these embodiments are provided for illustration only and are not to be construed in any way as limiting the present invention, and that various modifications and changes can be made by those skilled in the art without departing from the spirit and scope of the invention. Therefore, the accompanying claims and their equivalents are intended to cover such changes or modifications as would fall within the scope and spirit of the invention.

### [List of Reference numerals]

100: Attack surface information-based deception information generation system
110: Deception terminal
111: Luring information generation unit
112: Luring information determination unit
113: Luring information action unit
120: Luring terminal
121: Lured subject information collection unit
122: Lured subject information analysis unit
123: Luring unit

## Claims

1. A system for generating deception information based on attack surface information, the system comprising: a deception terminal configured to deceive cyber attackers attacking a ship, and a luring terminal configured to pose as an actual internal system of the ship to lure cyberattacks and analyze information of the cyber attackers, wherein
the deception terminal comprises a luring information generation unit generating luring information, a luring information determination unit determining whether a user, system, or device approaching the deception terminal is a legitimate user or a malicious user, and a luring information action unit transmitting a blocking or alarm event if the lured user, system, or device is determined to be a malicious user;
the luring terminal comprises a lured subject information collection unit collecting packets initially transmitted to the luring terminal, a lured subject information analysis unit analyzing the packets input to the luring terminal, and a luring unit allowing a luring agent to operate, the luring agent being generated based on the luring information generated by the luring information generation unit of the deception terminal; and
the system determines a risk level of a lured subject, based on received data including packet data input to the deception terminal and input data from the lured subject, and identifies the lured subject as an attacker to allow appropriate measures to be taken via notification if the risk level is calculated to be equal to or greater than a preset value.

2. The system according to claim 1, wherein the luring information generation unit of the luring terminal generates web pages, configuration files, dynamic navigation information, and system hardware information (MAC addresses) for a maritime satellite communication system of the ship.

3. The system according to claim 1, wherein the luring information determination unit of the luring terminal determines whether the lured subject is an attacker, based on a risk score calculated based on the received data including the input packets and the input data from the lured subject.

4. The system according to claim 1, wherein, if the risk level is calculated to be equal to or greater than a certain threshold, the luring information action unit of the luring terminal identifies the lured subject as an attacker and a deception system alerts a user via an emergency bell or message, a ship terminal alarm, or an HMI message on an alarm monitoring system of the ship.

5. The system according to claim 1, wherein the lured subject information analysis unit of the luring terminal classifies signals of the packets input to the luring terminal, defines and extracts message values from the classified signals, and extracts lured subject information from the extracted message values.

6. The system according to claim 1, wherein the luring unit of the luring terminal allows a luring agent to operate, the luring agent being generated by the luring information generation unit of the deception terminal based on programs, operating systems, and system information having characteristics of onboard equipment systems of the ship.

7. A method for generating deception information based on attack surface information in a system for generating deception information based on attack surface information, the system including a deception terminal configured to deceive cyber attackers attacking a ship, and a luring terminal configured to pose as an actual internal system of the ship to lure cyberattacks and analyze information of the cyber attackers, the method comprising:
a deception information generation step in which a luring information generation unit of the deception terminal generates luring information;
a lured subject information collection step in which the luring information generated in the luring information generation step is received and packets initially transmitted to the luring terminal are collected by a luring information collection unit;
a lured subject information analysis step in which lured subject information and the packets collected in the lured subject information collection step are analyzed;
a luring step in which a luring agent is operated by a luring unit, the luring agent being generated based on the luring information generated by the luring information generation unit of the deception terminal;
a luring information determination step in which it is determined whether a user, system, or device approaching the luring terminal in the luring step is a legitimate user or a malicious user; and
an action step in which, upon determining that the user, system, or device lured through the luring information determination step is a malicious user, a blocking or alarm event is transmitted from a luring information action unit.

8. The method according to claim 7, wherein the luring information generation step comprises: generating web pages, configuration files, dynamic navigation information, and system hardware information (MAC addresses) for a maritime satellite communication system of the ship.

9. The method according to claim 7, wherein the luring information determination step comprises determining whether a lured subject is an attacker, based on a risk score calculated based on received data including the input packets and input data from the lured subject.

10. The method according to claim 7, wherein, in the action step, if the risk level is calculated to be equal to or greater than a certain threshold, the target is identified as an attacker, and a deception system alerts a user via an emergency bell or message, a ship terminal alarm, or an HMI message on an alarm monitoring system of the ship.

11. The method according to claim 7, wherein the lured subject information analysis step comprises classifying signals of the packets input to the luring terminal, defining and extracting message values from the classified signals, and extracting lured subject information from the extracted message values.

12. The method according to claim 7, wherein the luring step comprises allowing a luring agent to operate, the luring agent being generated by the luring information generation unit of the deception terminal based on programs, operating systems, and system information having characteristics of onboard equipment systems of the ship.
